(19) Europäisches Patentamt
European Patent Office
Office européen des brevets

(11) **EP 4 281 786 B1**

(12) **EUROPÄISCHE PATENTSCHRIFT**

(45) Veröffentlichungstag und Bekanntmachung des Hinweises auf die Patenterteilung:
**18.06.2025 Patentblatt 2025/25**

(21) Anmeldenummer: **22700379.5**

(22) Anmeldetag: **11.01.2022**

(51) Internationale Patentklassifikation (IPC):
*G01P 5/20* (2006.01)    *G01N 15/1031* (2024.01)
*G01N 15/1434* (2024.01)    *G01N 15/1433* (2024.01)
*G01N 15/14* (2024.01)    *G01N 15/00* (2024.01)
*G01N 15/10* (2024.01)

(52) Gemeinsame Patentklassifikation (CPC):
**G01N 15/1434; G01N 15/1031; G01N 15/1433; G01N 15/1459; G01P 5/20;** G01N 2015/0003; G01N 2015/0046; G01N 2015/1027; G01N 2015/145

(86) Internationale Anmeldenummer:
**PCT/EP2022/050386**

(87) Internationale Veröffentlichungsnummer:
**WO 2022/157033 (28.07.2022 Gazette 2022/30)**

(54) **VERFAHREN ZUM BESTIMMEN EINER ORTSAUFGELÖSTE LADUNGSVERTEILUNG VON ELEKTRISCHEN LADUNGEN VON PARTIKELN IN EINEM GASSTROM UND PNEUMATIKFÖRDERVORRICHTUNG**

METHOD OF DETERMINING AT LEAST A SPATIALLY RESOLVED CHARGE DISTRIBUTION OF ELECTRICAL CHARGES FROM PARTICLES IN A GAS FLOW AND PNEUMATIC CONVEYOR DEVICE

PROCEDE DE DETERMINATION D'AU MOINS UNE DISTRIBUTION DE CHARGE À RÉSOLUTION SPATIALE PROVENANT DE PARTICULES DANS UN ECOULEMENT DE GAZ ET DISPOSITIF DE TRANSPORT PNEUMATIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **22.01.2021 DE 102021101409**

(43) Veröffentlichungstag der Anmeldung:
**29.11.2023 Patentblatt 2023/48**

(73) Patentinhaber: **Bundesrepublik Deutschland, vertreten durch das Bundesministerium für Wirtschaft und Energie, 38116 Braunschweig (DE)**

(72) Erfinder: **GROSSHANS, Holger**
**38104 Braunschweig (DE)**

(74) Vertreter: **Gramm, Lins & Partner**
**Patent- und Rechtsanwälte PartGmbB**
**Frankfurter Straße 3c**
**38122 Braunschweig (DE)**

(56) Entgegenhaltungen:
**WO-A1-2021/005396     JP-A- 2015 102 386**

EP 4 281 786 B1

**Beschreibung**

Die Erfindung betrifft ein Verfahren zum Bestimmen zumindest der ortsaufgelöste Ladungsverteilung von elektrischen Ladungen in Partikeln in einem Gasstrom. Gemäß einem zweiten Aspekt betrifft die Erfindung eine Pneumatikfördervorrichtung gemäß dem Oberbegriff von Anspruch 1.

Beim Transport von Partikeln in einem Gasstrom, insbesondere einem Luftstrom, kommt es oft zu einer elektrostatischen Aufladung der Partikel. Wird diese elektrostatische Aufladung zu groß, kann es zu einer Funkenentladung kommen. Das ist besonders dann nachteilig, wenn eine exotherme chemische Reaktion zwischen den Partikeln und dem Gas des Gasstroms möglich ist. Es kann dann zu einer Explosion kommen.

Die Entstehung von elektrostatischer Aufladung von Partikeln, die mittels eines Gasstroms gefördert werden, ist Gegenstand intensiver Forschungen, wird bislang aber nur schlecht verstanden.

Zur Bestimmung eines Ladungskennwert in Form einer Gesamtladung von elektrischen Ladungen von Partikeln in dem Gasstrom werden im Moment sogenannte Faraday-Becher verwendet. Die Partikel induzieren Ladungen am Faraday-Becher. Diese werden gemessen. Ein solcher Aufbau ist im Paper von Susanti und Großhans "Measurement of the deposit formation during pneumatic transport of PMMA powder", in: Advanced powder technology, Vol. 31, 2020, S. 3597-3609. - ISSN 0921-8831 beschrieben. Nachteilig an diesem Messverfahren ist, dass nur die Summe der Ladungen erfasst wird, nicht aber die jeweilige positive und negative Aufladung.

Nachteilig ist zudem, dass die elektrostatische Ladung nicht ortsaufgelöst messbar ist.

Aus der WO 2014/106078 A2 sind Sonden zur Überwachung elektrostatischer Phänomene in schwierigen Umgebungen, wie beispielsweise in Wirbelschichtreaktoren, bekannt. Diese Sonden umfassen eine beschichtete oder unbeschichtete Statik-Sonde zur Messung des elektrischen Feldes und/oder des Ladungszustands der Partikel, eine oszillierende elektrische Feldsonde zur Messung des elektrischen Feldes, eine Sonde mit geteiltem elektrischem Feld zur Messung des elektrischen Feldes und eine Hochfrequenz-Antennensonde zum Aufspüren elektrostatischer Entladungen. Mittels einer modifizierten Oberfläche wird erreicht, dass auf die Elektrode auftreffende Partikel die triboelektrische Aufladung der Sonde vermindern.

In der US 6 049 382 A werden eine Vorrichtung und ein Verfahren zur Charakterisierung von Sprays beschrieben, die aus kugelförmigen Partikeln bestehen. Eine Laserquelle erzeugt einen kollimierten Laserstrahl, der durch das zu charakterisierende Spray geführt wird. Der Laserstrahl fällt mit der x-Achse eines kartesischen Koordinatensystems zusammen, das sich in einer senkrecht zur Sprühachse verlaufenden Messebene befindet. 90°-Streuung, die von dem Spritzmaterial in einem kleinen Sondenvolumen erzeugt wird, das am Schnittpunkt des Laserstrahls und des Objektvolumens des Streuungsauffangmittels gebildet wird, wird erfasst. Zusätzliche Erfassungsmittel erfassen die Abschwächung des Laserstrahls, der die Messebene durchquert. Die optischen Systeme sind mit Fotodetektoren und Signalverarbeitungseinheiten gekoppelt, die in der Lage sind, elektrische Signale proportional zu den empfangenen Lichtintensitäten zu erzeugen. Eine Quereinrichtung bewegt den Sprühnebel in Richtung des Laserstrahls und senkrecht dazu, um nacheinander eine tomographische Aufzeichnung der Streu- und Dämpfungsaktivität in Punkten des Sprühnebels zu erhalten, die ein kartesisches Gitter innerhalb der Messebene bilden. Konzentrationsmessmittel sind mit den elektrischen Ausgangssignalen der Dämpfung und Streuung gekoppelt, um die Information über die Anzahldichte des Sprays in den Knoten des tomographischen Gittersystems zu gewinnen.

In der US 8 470 151 B2 wird ein mikrofiuidischer Pumpansatz vorgestellt, der die Wanderwellen-Dielektrophorese (tw-DEP) von Mikropartikeln nutzt. Die Strömung wird direkt in den mikrofiuidischen Objekten erzeugt, indem elektromechanische Effekte in der Flüssigkeit durch Mikroelektroden induziert werden. Die fluidischen Antriebsmechanismen aufgrund der Partikel-Fuid- und Partikel-Partikel-Wechselwirkungen unter Wanderwellen-Dielektrophorese werden analysiert, und das induzierte Strömungsfeld wird aus numerischen Simulationen gewonnen.

In der EP 3 431 264 B1 ist ein 3D-Drucker beschrieben, der eine optische Bestimmungsvorrichtung aufweist, mittels der einen Parameter zur Charakterisierung der Strömungseigenschaften des die Prozesskammer durchströmenden Gasstroms eignet, bestimmt wird. Die optische Bestimmungsvorrichtung hat eine optische Messeinheit zum optischen Messen eines Messwerts innerhalb der Prozesskammer, wobei der Messwert in Beziehung mit dem Gasstrom steht. Eine Auswerteeinheit bestimmt aus dem Messwert den zumindest einen Parameter. Die Messwerte werden an unterschiedlichen Orten innerhalb der Prozesskammer gemessen. Dadurch der Partikelstrom beim Drucken gut gesteuert werden.

Im Paper von Großhans et al "Exploring the meachanism of inter-particle charge diffusion. In: The European physical journal: applied physics, Vol. 82, 2018, No. 1, Art. 11101 (9 8.), ISSN 1286-0042 wird ein numerisches mathematisches Modell zur interpartikulären Ladungsübertragung vorgestellt.

WO 2021/005396 A1 und JP 2015 102386 A offenbaren Verfahren zur Bestimmung der Geschwindigkeit von Tröpfchen oder Partikeln in Wasser.

Der Erfindung liegt die Aufgabe zugrunde, Nachteile im Stand der Technik zu vermindern.

Die Erfindung löst das Problem durch ein Verfahren zum Bestimmen der ortsaufgelösten Ladungsverteilung mit den Merkmalen von Anspruch 1.

Gemäß einem zweiten Aspekt löst die Erfindung das Problem durch eine Pneumatikfördervorrichtung mit den Merkmalen von Anspruch 8.

Vorteilhaft an der Erfindung ist, dass ortsaufgelöste Informationen über die Ladungsverteilung im Gasstrom erhalten werden. Anders bei Verfahren nach dem Stand der Technik ist es möglich, etwaig vorhandene Bereiche positiver Ladung und negativer Ladung zu erfassen. Bei Verfahren, die einen Faraday-Becher verwenden, wird lediglich die Gesamtladung bestimmt. Elektrostatische Felder, die zwischen Bereichen des Gasstroms und/oder zwischen Partikeln ausgebildet sein können, können mit Verfahren nach dem Stand der Technik nicht erfasst werden, wohl aber mit dem erfindungsgemäßen Verfahren.

Günstig ist es, dass eine Explosionsgefahr in der Regel deutlich besser erfasst werden kann, da die Voraussetzungen für Zündfunken, nämlich ein zu großes elektrostatisches Feld, das unabhängig von dem etwaig anliegenden elektrischen Messfeld vorhanden ist, mit höherer Sicherheit bestimmbar ist.

Günstig ist zudem, dass der Ladungskennwert berührungsfrei gemessen werden kann. Es kommt daher zu keiner nennenswerten Beeinflussung des Gasstroms und/oder der Partikel aufgrund der Messung. Insbesondere wird zur Messung des Ladungskennwerts vorzugsweise kein Teilstrom aus dem Gasstrom ausgekoppelt.

Günstig ist es daher, wenn der Ladungskennwert partikelverlustfrei gemessen wird. **In** anderen Worten ist es nicht notwendig, dem Gasstrom zumindest zeitweise Partikel zu entnehmen, um den Ladungskennwert zu bestimmen.

Im Rahmen der vorliegenden Beschreibung wird unter dem elektrischen Messfeld vorzugsweise ein zumindest im Wesentlichen homogenes Messfeld verstanden. Unter einem zumindest im Wesentlichen homogenen Messfeld wird insbesondere verstanden, dass das Messfeld zwar inhomogen sein kann, dass diese Inhomogenität aber so schwach ausgebildet ist, dass sie die Messunsicherheit bei der Bestimmung des Ladungskennwerts um höchstens 5 % erhöht. Es ist aber auch möglich, ein inhomogenes Messfeld zu verwenden.

Unter dem ortsaufgelösten Bestimmen der Partikelgeschwindigkeit wird insbesondere verstanden, dass die Partikelgeschwindigkeit in Abhängigkeit von zumindest einer Raumkoordinate bestimmt wird. Insbesondere verläuft diese Raumkoordinate quer zu einer Strömungsrichtung des Gasstroms.

Die Partikelgeschwindigkeiten werden vorzugsweise zumindest bezüglich zweier Raumkoordinaten bestimmt. Insbesondere umfasst das Bestimmen der Partikelgeschwindigkeiten eine Partikelgeschwindigkeitskomponente quer zur Strömungsrichtung und/oder längs der Strömungsrichtung. Es ist möglich, nicht aber notwendig, dass die Partikelgeschwindigkeit in allen drei Raumkoordinaten bekannt ist. Es ist zudem möglich, nicht aber notwendig, dass die Partikelgeschwindigkeiten in Abhängigkeit von zwei oder drei Raumkoordinaten bekannt sind, es reicht aber grundsätzlich aus, wenn die Partikelgeschwindigkeiten in Abhängigkeit von einer Raumkoordinate bekannt sind.

Unter dem Merkmal, dass das Messfeld quer zur Strömungsrichtung angelegt wird, wird insbesondere verstanden, dass es möglich, nicht aber notwendig ist, dass das elektrische Messfeld im mathematischen Sinne senkrecht zur Strömungsrichtung angelegt wird. Unter der Strömungsrichtung wird die makroskopische Strömungsrichtung des Gasstroms verstanden. Ist die Fluidleitung im Messbereich, wie gemäß einer bevorzugten Ausführungsform vorgesehen, prismatisch, handelt es sich also beispielsweise um ein nicht gekrümmtes Rohr, entspricht die Strömungsrichtung der Längsrichtung der Fluidleitung.

Unter dem Merkmal, dass zumindest ein Ladungskennwert bestimmt wird, wird insbesondere verstanden, dass es möglich, nicht aber notwendig ist, dass genau ein Ladungskennwert ermittelt wird. Es kann sich bei diesem Ladungskennwert beispielsweise um einen Maximalwert der Ladungsdichte handeln. Alternativ oder zusätzlich kann es sich um den Betrag des maximalen Gradienten handeln.

Unter dem Bestimmen der Partikelgeschwindigkeit wird insbesondere das Bestimmen von zeitlichen Mittelwerten verstanden. Die zeitlichen Mittelwerte beziehen sich vorzugsweise auf eine Mittlungszeit zwischen einer Sekunde und einer Minute.

Unter einem Durchmesser gesprochen wird der Sauterdurchmesser nach DIN ISO 9276 verstanden.

Besonders günstig ist es aber, wenn das Bestimmen des zumindest einen Ladungskennwerts das Bestimmen einer Vielzahl an Ladungskennwerten ist. Insbesondere handelt es sich bei den Ladungskennwerten um Funktionswerte einer ortsaufgelösten Ladungsverteilung. Die Ladungsverteilung ordnet zumindest einer Raumkoordinate quer zur Strömungsrichtung die Ladungsdichte zu oder eine Größe, aus der die Ladungsdichte bestimmt werden kann. Die Ladungsdichte wird angegeben in Ladung pro Volumeneinheit oder Ladung pro Flächeneinheit.

Alternativ oder zusätzlich ist das Bestimmen des zumindest einen Ladungskennwerts ein Bestimmen zumindest eines Ladungsgradienten. Der Ladungsgradient ergibt sich durch Ableitung der Ladungsverteilung. Aus dem Ladungsgradienten kann das lokal vorliegende elektrische Feld bestimmt werden, das aufgrund der elektrostatischen Aufladung der Partikel entsteht.

Bei dem Fluid handelt es sich vorzugsweise um ein Gas, insbesondere um Luft. Vorzugsweise ist der partikelhaltige Gasstrom durch elektrischen Funken zündbar. Hierunter wird insbesondere verstanden, dass es aufgrund eines Zündfunkens zu einer chemischen Reaktion zwischen den Partikeln und zumindest einem Bestandteil des Gasstroms oder zwischen Bestandteilen des Gasstroms kommen kann. In diesem Fall ist es besonders wichtig, sicherzustellen, dass die elektrostatische Aufladung nicht zu stark wird.

Gemäß einer bevorzugten Ausführungsform wird das Bestimmen der Messfeldlos-Partikelgeschwindigkeit mittels Partikelbildvelozimetrie durchgeführt. Alternativ oder zusätzlich wird das Bestimmen der Messfeldlos-Partikelgeschwindigkeit mittels Laser-Doppler-Anemometrie durchgeführt. Alternativ oder zusätzlich wird das ortsaufgelöste Bestimmen der Mitfeld-Partikelgeschwindigkeit vorzugsweise mittels Partikelbildvelozimetrie und/oder mittels Laser-Doppler-Anemometrie durchgeführt. Mit diesen Messverfahren sind vergleichsweise hohe Messgeschwindigkeiten, Ortsauflösungen und geringe Messunsicherheiten erreichbar.

Das ortsaufgelöste Bestimmen umfasst die folgenden Schritte: (a) der Messfeldlos-Partikelgeschwindigkeit: (i) Aufnehmen eines ersten Messfeldlos-Bilds einer Vielzahl an Partikeln zu einem ersten Zeitpunkt, (ii) Aufnehmen eines zweiten Messfeldlos-Bilds der Partikel zu einem zweiten Zeitpunkt, der um einen Zeitversatz später liegt, (iii) Bestimmen der Messfeldlos-Partikelgeschwindigkeit aus den Messfeldlos-Bildern und (b) der Mitfeld-Partikelgeschwindigkeit: (i) Aufnehmen eines ersten Mitfeld-Bilds einer Vielzahl an Partikeln zu einem dritten Zeitpunkt, (ii) Aufnehmen eines zweiten Bild der Partikel zu einem vierten Zeitpunkt, der um einen, insbesondere den gleichen, Zeitversatz später liegt, und (iii) Bestimmen der Mitfeld-Partikelgeschwindigkeit aus den Mitfeld-Bildern.

Beim Aufnehmen der Bilder werden die Partikel im Gasstrom vorzugsweise mit einem Lichtblatt bestrahlt, das vorzugsweise mittels eines Lasers erzeugt wird. Auf diese Weise werden die Positionen derjenigen Partikel bestimmt, die vom Lichtblatt erfasst werden. Das Aufnehmen der Bilder erfolgt vorzugsweise mit einer Kamera, die in optischer Achse quer zur Strömungsrichtung verläuft. Damit verläuft die optische Achse vorzugsweise zumindest im Wesentlichen senkrecht zum Lichtblatt.

Vorzugsweise beträgt ein Winkel $\beta_H$ zwischen dem Lichtblatt und einer Horizontalen höchstens 22°, insbesondere höchstens 15°. In diesem Fall ist die Gravitationskraft vernachlässigbar.

Günstig ist es, wenn der Zeitversatz höchstens drei Sekunden, insbesondere höchstens eine Sekunde, vorzugsweise höchstens 0,5 Sekunden beträgt. Alternativ oder zusätzlich ist es günstig, wenn der Zeitversatz so gewählt ist, dass sich die Partikel zwischen dem ersten Zeitpunkt und dem zweiten Zeitpunkt um höchstens 30 Millimeter, insbesondere höchstens 15 Millimeter, fortbewegt haben. Hierbei handelt es sich jeweils um Mittelwerte.

Es ist möglich, dass die Zahl der Partikel, mittels derer die Mitfeld-Partikelgeschwindigkeit bestimmt wird, sich von der Zahl der Partikel, mittels derer die Mitfeld-Partikelgeschwindigkeit und die Messfeldlos-Partikelgeschwindigkeit bestimmt wird, um höchstens 30 % unterscheidet. In der Regel werden die Messzeitlos-Partikelgeschwindigkeit und die Mitfeld-Partikelgeschwindigkeit aber zumindest überwiegend an unterschiedlichen Partikeln bestimmt.

Günstig ist es, wenn das ortsaufgelöste Bestimmen der Messzeitlos-Partikelgeschwindigkeit die folgenden Schritte aufweist: (i) in einem ersten Zeitraum Aufnehmen eines Messfeldlos-Bilds einer Vielzahl von Partikeln, die von einem Lichtblatt bestrahlt werden, wobei sich das Lichtblatt entlang der Strömungsrichtung des Gasstroms erstreckt, (ii) im ersten Zeitraum Verändern einer Lichteigenschaft, insbesondere einer Helligkeit oder einer Farbe, des Lichtblatts und (iii) Bestimmen der Messfeldlos-Partikelgeschwindigkeit aus dem Messfeldlos-Bild. Alternativ oder zusätzlich weist das ortsaufgelöste Bestimmen der Mitfeld-Partikelgeschwindigkeit die folgenden Schritte aufweist: (i) in einem zweiten Zeitraum Aufnehmen eines zweiten Mitfeld-Bilds einer Vielzahl von Partikeln, die vom Lichtblatt bestrahlt werden, (ii) im zweiten Zeitraum Verändern einer Lichteigenschaft, insbesondere einer Helligkeit oder einer Farbe, des Lichtblatts und (iii) Bestimmen der Mitfeld-Partikelgeschwindigkeit aus dem Mitfeld-Bild.

Um den Einfluss des Anlegens des elektrischen Messfelds vom Einfluss von Turbulenzen auf die Partikel unterscheiden zu können, umfasst das Verfahren vorzugsweise die Schritte: (a) Hinzufügen von Tracerpartikeln zum Gasstrom, (b) Bestimmen einer Luftgeschwindigkeit des Gasstroms mittels Partikelbildvelozimetrie und (c) Bestimmen des Ladungskennwerts aus der ortsaufgelösten Luftgeschwindigkeit, der Messfeldlos-Partikelgeschwindigkeit und der Mitfeld-Partikelgeschwindigkeit (mit und ohne elektrischem Feld). Diese Schritte werden vorzugsweise zumindest dann durchgeführt, wenn sich die Reynolds-Zahl um mehr als 10%, insbesondere zumindest 20%, geändert hat.

Vorzugsweise wird das Verfahren an Partikeln durchgeführt, deren Durchmesser zumindest 10 Mikrometer beträgt. Vorzugsweise beträgt deren Durchmesser höchstens 500 Mikrometer. Ein Durchmesser der Tracerpartikel ist vorzugsweise kleiner als der Durchmesser der Partikel, insbesondere beträgt er vorzugsweise höchstens ein Fünftel des Durchmessers der Partikel. Günstig ist es, wenn Tracerpartikel einen Durchmesser von zumindest 1 Mikrometer und/oder höchstens 10 Mikrometer haben.

Günstig ist es, wenn der zumindest eine Ladungskennwert eine ortsaufgelöste Ladungsverteilung ist.

Vorzugsweise umfasst das Verfahren den Schritt eines Ausgebens einer Warnmeldung, wenn der zumindest eine Ladungskennwert außerhalb eines Soll-Ladungskennwertintervalls liegt. Beispielsweise handelt es sich bei dem Soll-Ladungskennwertintervall um einen Intervall, in dem ein Maximum der Ladungsverteilung liegt. Liegt zumindest einer der Ladungskennwerte außerhalb des Soll-Ladungskennwertintervalls, so deutet das darauf hin, dass die elektrostatische Aufladung der Partikel im Gasstrom zu groß geworden ist.

Vorzugsweise erfolgt das Bestimmen des zumindest einen Ladungskennwerts aus den ortsaufgelösten Partikelgeschwindigkeiten, die anhand der Formel

$$Q(y,z) = \frac{\pi \rho C_d r^2}{2E \cdot \cos\beta} \left[ \left| \overline{u}_\beta - \overline{v}_{\beta,E} \right| (\overline{u}_\beta - \overline{v}_{\beta,E}) - \left| \overline{u}_\beta - \overline{v}_\beta \right| (\overline{u}_\beta - \overline{v}_\beta) \right]$$

erfolgt, mit

$\rho$     der Luftdichte,

$\beta$     dem Winkel zwischen den elektrischen Messfeldlinien und dem Lichtblatt,

$C_d$     dem Strömungswiderstandskoeffizienten,

$r$     dem Sauterdurchmesser nach DIN ISO 9276 der Partikel,

$\overline{u}_\beta$     der Geschwindigkeitskomponente des Gasstroms im Lichtplatt quer zur Strömungsrichtung,

$\overline{v}_\beta$     der Geschwindigkeitskomponente der Partikel im Lichtplatt quer zur Strömungsrichtung ohne elektrisches Messfeld und

$\overline{v}_{\beta,E}$     der Geschwindigkeitskomponente der Partikel im Lichtplatt quer zur Strömungsrichtung bei angelegtem elektrischem Messfeld.

Die Herleitung dieser Formel wird weiter unten angegeben. Unter dem Merkmal, dass der zumindest eine Ladungskennwert anhand der angegebenen Formel bestimmt wird, wird insbesondere verstanden, dass eine Rechnung durchgeführt wird, deren Ergebnis um maximal 10 %, insbesondere maximal 5 %, von dem Ergebnis abweicht, was mit der angegebenen Formel erreicht worden wäre. **In** anderen Worten ist es unbeachtlich, ob die Formel direkt bei der Berechnung implementiert, das heißt verwendet wird. Maßgeblich ist lediglich, dass die Messergebnisse so verrechnet werden, dass sie zumindest im Wesentlichen dem Ergebnis entsprechen, das anhand der angegebenen Formel erhalten wird.

Alternativ oder zusätzlich wird das Bestimmen des zumindest einen Ladungskennwerts aus den ortsaufgelösten Partikelgeschwindigkeiten anhand der Formel

$$Q(y,z) = \pi \rho C_d r^2 \left| \overline{u}_\beta - \overline{v}_\beta + \overline{v}_{\beta,E} \right| \frac{\overline{u}_\beta - \overline{v}_\beta + \overline{v}_{\beta,E}}{2E \cdot \cos\beta}$$

durchgeführt.

Vorzugsweise wird das Verfahren an einem turbulenten Gasstrom durchgeführt. An turbulenten Fluidströmen ist bislang keine aussagekräftige Messung eines Ladungskennwerts möglich.

Günstig ist es, wenn der Gasstrom zumindest im Wesentlichen vertikal verläuft. Hierunter wird insbesondere verstanden, dass ein Winkel zwischen dem Vektor der Strömungsgeschwindigkeit und der Vertikalen höchstens 25 °, insbesondere höchstens 15 °, beträgt.

Vorzugsweise umfasst das Verfahren die Schritte (a) Verändern einer Lage des Lichtblatts relativ zur Fluidleitung und (b) Bestimmen des zumindest einen Ladungskennwerts aus den ortsaufgelösten Partikelgeschwindigkeiten. Günstig ist es, wenn der zumindest eine Ladungskennwert für eine Vielzahl an unterschiedlichen Lagen des Lichtblatts erfasst wird.

Ein erfindungsgemäßes Gasstromladungsmessgerät ist vorzugsweise ausgebildet zum automatischen Abgeben eines Warnsignals, wenn der Ladungskennwert außerhalb des Soll-Ladungskennwertintervalls liegt. Das Abgeben eines Warnsignals kann beispielsweise das Abgeben eines akustischen, optischen, elektrischen oder elektromagnetischen Signals sein. Vorzugsweise ist das Warnsignal ein elektronisches Signal, das die Nachricht kodiert, dass der Ladungskennwert außerhalb des Soll-Ladungskennwertintervalls liegt. Günstig ist es, wenn das Gasstrom-ladungsmessgerät ausgebildet ist zum Abgeben dieser Warnmeldung über ein BusSystem.

Erfindungsgemäß ist zudem eine Pneumatikfördervorrichtung zum Transportieren von Partikeln mittels eines Gasstroms mit (a) einem Gasstromerzeuger, insbesondere einem Gebläse oder einem Kompressor, zum Erzeugen des Gasstroms, insbesondere eines Gasstroms, (b) einem erfindungsgemäßen Gasstromladungsmessgerät. Vorzugsweise besitzt die Pneumatikfördervorrichtung eine Partikelzuführung zum Zuführen von Partikeln zum Gasstrom. Bei einer derartigen Pneumatikfördervorrichtung führt das erfindungsgemäße Gasstromladungsmessgerät dazu, dass Schäden durch zu große elektrostatische Ladungen der Partikel stark vermindert werden können.

Im Folgenden wird die Erfindung anhand der beigefügten Zeichnungen näher erläutert. Dabei zeigt

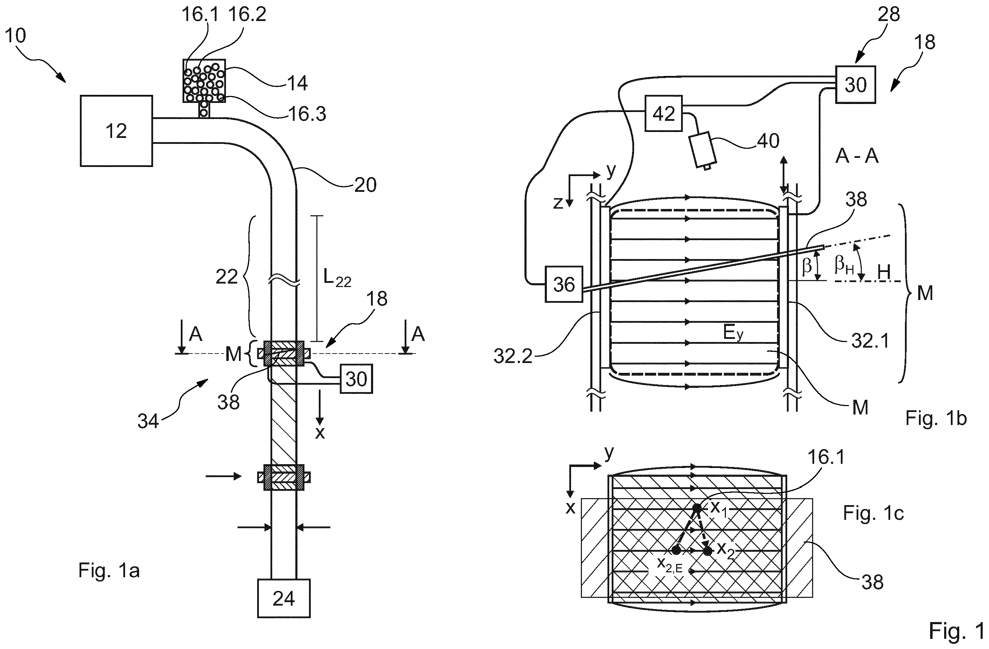

Figur 1     in der Teilfigur 1a eine schematische Seitenansicht einer erfindungsgemäßen Pneumatikfördervorrichtung mit einem erfindungsgemäßen Gasstromladungsgerät zum Durchführen eines erfindungsgemäßen Verfahrens, in d Teilfigur 1b einen Querschnitt A-A gemäß Figur 1 und in Teilfigur 1c eine Vergrößerung des Bereichs B gemäß Figur 1a.

Figur 1a zeigt eine erfindungsgemäße Pneumatikfördervorrichtung 10 mit einem Gasstromerzeuger 12 in Form eines Gebläses zum Erzeugen eines Gasstroms, einer Partikelzuführung 14 zum Zuführen von schematisch eingezeichneten Partikeln 16.i und einem erfindungsgemäßen Gasstromladungsmessgerät 18.

Der Gasstromerzeuger 12 ist im vorliegenden Fall ein Gebläse zum Erzeugen eines Gasstroms in Form eines Druckluftstroms mit einem Druck von beispielsweise p = 300 kPa. Bei den Partikeln 16.i kann es sich beispielsweise um Lebensmittelpartikel handeln, beispielsweise Tee, Kaffee oder Mehl.

Der Gasstrom strömt durch eine Fluidleitung 20. Es ist günstig, wenn die Fluidleitung 20 einen Turbulenzausbildungsabschnitt 22 aufweist, dessen Länge $L_{22}$ vorzugsweise zumindest 2 Meter, insbesondere zumindest 3 Meter beträgt. Vorzugswiese beträgt die Länge $L_{22}$ höchstens 100 Meter. Im Turbulenzausbildungsabschnitt 22 bildet sich eine turbulente Strömung des Gasstroms, die sich im in Strömungsrichtung S hinteren Abschnitt hinsichtlich ihres Turbulenzmaßes nicht mehr ändert. Günstig ist es, wenn die Länge $L_{22}$ zumindest das Zehnfache eines Durchmessers der Fluidleitung 20 beträgt.

In Strömungsrichtung S hinter dem Turbulenzausbildungsabschnitt 22 ist das Gasstromladungsmessgerät 18 angeordnet. In Strömungsrichtung S hinter dem Gasstromladungsmessgerät 18 ist schematisch eine Partikelsenke 24 angeordnet. Bei der Partikelsenke 24 kann es sich beispielsweise um ein Lager für die Partikel 16.i handeln. Alternativ kann es sich bei der Partikelsenke aber auch um eine Maschine zum Weiterverarbeiten der Partikel, beispielsweise zum Verpacken, Umformen, Pressen oder dergleichen handeln.

Es ist günstig und stellt unabhängig von den ansonsten für die Ausführungsform genannten Merkmalen eine bevorzugte Ausführungsform dar, dass die Fluidleitung 20 im Turbulenzausbildungsabschnitt 22 und einem Messabschnitt 26 gleiche Querschnitte hat. Es handelt sich hierbei um eine Gleichheit im technischen Sinne, das heißt, dass es möglich ist, dass sich die Querschnitte und/oder die Querschnittsformen der Fluidleitung 20 ändern können, dass diese Änderung jedoch so klein ist, dass sie Messunsicherheit bei der Messung eines zu messenden Ladungskennwerts K zu einer Messunsicherheit von höchstens 10 % führt.

Figur 1b zeigt einen Querschnitt A - A gemäße Figur 1a. Es ist zu erkennen, dass das Gasstrom-Ladungsmessgerät 18 einen Messfelderzeuger 28 aufweist. Der Messfelderzeuger 28 umfasst eine Spannungsquelle 30 sowie Elektroden 32.1, 32.2. Zwischen den Elektroden 32.1, 32.2 bildet sich ein elektrisches Feld E, dass in guter Näherung als homogen betrachtet werden kann. Der Messwerterzeuger 28 ist eingerichtet zum Erzeugen eines Felds von zumindest E = 1 kV/m. Vorzugsweise ist das elektrische Feld kleiner als E = 2 MV/m.

Das elektrische Feld liegt in einem Messbereich M an. Das Gasstromladungsmessgerät 18 umfasst zudem einen Partikelgeschwindigkeitsmesser 34, der im vorliegenden Fall durch eine Partikelbildvelozimetrie-Messeinheit gebildet ist. Die Partikelbildvelozimetrie-Messeinheit 34 umfasst einen Laser 36 (siehe Figur 1b) zum Erzeugen eines Lichtblatts 38 sowie eine Kamera 40. Mittels einer Auswerteeinheit 40 werden von der Kamera 40 aufgenommene Bilder analysiert und daraus eine Partikelgeschwindigkeitsverteilung v(y,z) bestimmt. Durch Mitteln über eine Mittelungszeit $\tau_M$ von beispielsweise $\tau_M$ = 60 Sekunden wird eine gemittelte Partikelgeschwindigkeitsverteilung $\overline{v}(y,z)$.

Ein erfindungsgemäßes Verfahren wird dadurch durchgeführt, dass zunächst die Partikelgeschwindigkeit ortsaufgelöst bestimmt wird, sodass die Partikelgeschwindigkeitsverteilung v(y,z) erhalten wird. Dazu werden beispielsweise zwei Bilder, die Messfeldlos-Bilder genannt werden, da kein elektrisches Feld E anliegt, aufgenommen. Die beiden Messfeldlos-Bilder werden nacheinander zu einem ersten Zeitpunkt $t_1$ und $t_2$ aufgenommen. Die beiden Zeitpunkte sind um einen Zeitversatz $\tau_v = t_2 - t_1$ voneinander zeitlich beabstandet.

Nach einer Wartezeit $\tau_W$ nach dem zweiten Zeitpunkt $t_2$ steuert die Auswerteeinheit 42 die Spannungsquelle 30 so an, dass eine Spannung $U_{38}$ zwischen den Elektroden 32.1, 32.2 angelegt wird. Die Wartezeit $\tau_W$ ist möglichst klein und beträgt im Idealfall höchstens 500 Millisekunden.

Es werden dann von der Kamera 40 zwei Mitfeld-Bilder zu einem dritten Zeitpunkt $t_3$ bzw. einem vierten Zeitpunkt $t_4$ aufgenommen. Aus diesen Bildern wird eine Mitfeld-Partikelgeschwindigkeit $v_E$ bestimmt. Es sei darauf hingewiesen, dass es unbeachtlich ist, ob zuerst die Mitfeld-Partikelgeschwindigkeit $v_E$ bestimmt wird und danach die Messfeldlos-Partikelgeschwindigkeit v oder umgekehrt.

Alternativ kann die Partikelgeschwindigkeitsverteilung v(y,z) auch mittels Laser-Doppler-Anemometrie bestimmt werden. Wiederum alternativ ist es möglich, dass die Partikelgeschwindigkeitsverteilung v(y,z) mittels Einbild-Partikelbildvelozimetrie bestimmt wird. Bei diesem Verfahren wird eine Lichteigenschaft, beispielsweise die Helligkeit oder die Farbe, des Lichtblatts 38 während der Aufnahme des jeweiligen Bilds geändert. Auf dem jeweiligen Bild, also dem Messfeldlos-Bild und dem Mitfeld-Bild sind dann Trajektorien der Partikel 16.i zu sehen, wobei die Änderung der Lichteigenschaft die Änderung der Zeit kodiert.

Figur 1c zeigt schematisch das Partikel 16.1, das zum Zeitpunkt $t_1$ an der Position $x_1$ ist. Die x-Koordinate wird in Strömungsrichtung S gemessen, die y- und die z-Koordinate senkrecht dazu, sodass sich ein Rechtssystem ergibt.

Zum Zeitpunkt $t_2$ ergibt sich die Position $x_2$, wenn kein elektrisches Feld anliegt, das heißt, wenn E = 0 gilt. Liegt das elektrische Feld an, ergibt sich die Position $x_{2,E}$.

Um die Strömungsverhältnisse des Gasstroms zu charakterisieren, werden in einem Vorversuch ausschließlich Tracerpartikel, beispielsweise mittels der Partikelzuführung 14 in den Gasstrom eingebracht. Die Tracerpartikel sind deutlich kleiner als die Partikel 16.i, deren elektrostatische Aufladung mittels eines erfindungsgemäßen Verfahrens bestimmt werden soll. Es wird angenommen, dass die Tracerpartikel so leicht sind, dass eine Tracerpartikel-Geschwindigkeitsverteilung u(y,z) in guter Näherung bei der Geschwindigkeitsverteilung der Fluidvolumina des Gasstroms entspricht.

Es sei darauf hingewiesen, dass die Geschwindigkeiten der Tracerpartikel mit u bezeichnet werden, die Geschwindigkeiten der Partikel 16.i jedoch mit v.

Aus einer Mehrzahl an Messungen mit den Tracerpartikeln werden jeweils jeweilige Trefferpartikelgeschwindigkeitsverteilungen $u_{j(y,z)}$ erhalten. Durch Mitteln einer Mittelungszeit T wird eine durchschnittliche ortsaufgelöste Tracerpartikelgeschwindigkeit $\bar{u}(y,z)$ erhalten. Querstrich signalisiert den zeitlichen Mittelwert.

Ohne elektrisches Feld wirkt die aerodynamische Kraft auf die Partikel 16.i:

$$F_d = \frac{1}{2}\, \rho\, C_o\, \pi\, r^2 \left|\bar{u}_\beta - \bar{v}_\beta\right|\left(\bar{u}_\beta - \bar{v}_\beta\right) \tag{1}$$

Wird das elektrische Feld angelegt, so ergibt sich:

$$F_{d,E} = \frac{1}{2}\, \rho\, C_D\, \pi\, r^2 \left|\bar{u}_\beta - \bar{v}_{\beta,E}\right|\left(\bar{u}_\beta - \bar{v}_{\beta,E}\right) \tag{2}$$

Auf die Partikel wirkt die elektrostatische Kraft:

$$F_e = QE\cos\beta \tag{3}$$

Ein Winkel $\beta_H$ zwischen dem Lichtblatt 38 und einer Horizontalen H beträgt im vorliegenden Fall $\beta_H = 22°$. Die Gravitationskraft ist daher vernachlässigbar.

Durch Bilden der Differenz aus Gleichungen (1) und (2) ergibt sich

$$Q(y,z) = \frac{\pi\rho C_d r^2}{2E\cdot\cos\beta}\left[\left|\bar{u}_\beta - \bar{v}_{\beta,E}\right|\left(\bar{u}_\beta - \bar{v}_{\beta,E}\right) - \left|\bar{u}_\beta - \bar{v}_\beta\right|\left(\bar{u}_\beta - \bar{v}_\beta\right)\right] \tag{4}$$

Die geraden Klammern bezeichnen den Absolutbetrag. Es gibt sich so die Ladungsverteilung Q(y,z). Diese Ladungsverteilung hat einen Maximalwert $Q_{max}$, der einen Ladungskennwert K darstellt. Die Ladungsverteilung Q(y,z) hat zudem ein Gradientenfeld VQ(y,z). Dieses Gradientenfeld hat einen Maximalgradienten, was der Gradienten maximalen Betrages ist. Auch dieser stellt einen Ladungskennwert K dar. Auch alle einzelnen Funktionswerte der Ladungsverteilung Q(y,z) stellen Ladungskennwerte K dar.

Das Projekt, das zu dieser Patentanmeldung geführt hat, wurde vom Europäischen Forschungsrat unter der Nr. 947606 im Rahmen des Forschungs- und Innovationsprogramms European Union's Horizon 2020 gefördert.

**Bezugszeichenliste**

| | | | | |
|---|---|---|---|---|
| 10 | Pneumatikfördervorrichtung | | S | Strömungsrichtung |
| 12 | Gasstromerzeuger | | T | Mittlungszeit |
| 14 | Partikelzuführung | | t | Zeit |
| 16 | Partikel | | $U_{38}$ | Spannung |
| 18 | Gasstromladungsmessgerät | | u(y,z) | Fluidgeschwindigkeitsverteilung |
| 20 | Fluidleitung | | $\bar{u}(y,z)$ | zeitlich gemittelte Fluidgeschwindigkeitsverteilung |
| 22 | Turbulenzausbildungsabschnitt | | | |
| 24 | Partikelsenke | | v(y,z) | Partikelgeschwindigkeitsverteilung |
| 26 | Messabschnitt | | $\bar{v}(y,z)$ | zeitlich gemittelte Partikelgeschwindigkeitsverteilung |
| 28 | Messfelderzeuger | | | |
| | | | v | Messfeldlos-Partikelgeschwindigkeit |
| 30 | Spannungsquelle | | | |
| 32 | Elektrode | | $v_E$ | Partikelgeschwindigkeit |
| 34 | Partikelgeschwindigkeitsmesser | | | |
| 36 | Laser | | | |

(fortgesetzt)

| 38 | Lichtblatt |
|---|---|
| 40 | Kamera |
| 42 | Auswerteeinheit |
| $\tau_W$ | Wartezeit |
| $\tau_v$ | Zeitversatz |
| VQ(y,z) | Gradientenfeld |
| E | elektrisches Feld |
| H | Horizontal |
| i | Laufindex |
| K | Ladungskennwert |
| $L_{22}$ | Länge |
| M | Messbereich |
| p | Fluiddruck |
| Q(y,z) | Ladungsverteilung |
| $Q_{max}$ | Maximalwert der Ladungsverteilung |

**Patentansprüche**

1. Verfahren zum Bestimmen einer ortsaufgelöste Ladungsverteilung (Q(y,z)) von elektrischen Ladungen von Partikeln (16) in einem Gasstrom einer Pneumatikfördervorrichtung (10), wobei die Partikel (16) in dem Gasstrom elektrostatisch aufladbar sind, mit den Schritten:

   (a) Leiten des Gasstroms, der Partikel (16) enthält, durch eine Fluidleitung (20),
   (b) ortsaufgelöstes Bestimmen einer Messfeldlos-Partikelgeschwindigkeit (v), in einem Messbereich ohne elektrisches Messfeld,
   (c) Anlegen eines elektrischen Messfelds quer zur Strömungsrichtung (S) im Messbereich,
   (d) ortsaufgelöstes Bestimmen einer Mitfeld-Partikelgeschwindigkeit ($v_E$) im Messbereich und
   (e) Bestimmen der ortsaufgelösten Ladungsverteilung (Q(y,z)) aus den ortsaufgelösten Partikelgeschwindigkeiten.

2. Verfahren nach Anspruch 1, **dadurch gekennzeichnet, dass** das ortsaufgelöste Bestimmen der Messfeldlos-Partikelgeschwindigkeit (v) und/oder der Mitfeld-Partikelgeschwindigkeit ($v_E$) mittels Partikelbildvelozimetrie erfolgt.

3. Verfahren nach einem der vorstehenden Ansprüche, **dadurch gekennzeichnet, dass** das ortsaufgelöste Bestimmen der Messfeldlos-Partikelgeschwindigkeit (v) und Mitfeld-Partikelgeschwindigkeit (vE) mittels Laser-Doppler-Anemometrie erfolgt.

4. Verfahren nach einem der vorstehenden Ansprüche, **dadurch gekennzeichnet, dass**

   (a) das ortsaufgelöste Bestimmen der Messfeldlos-Partikelgeschwindigkeit die folgenden Schritte aufweist:

   (i) Aufnehmen eines ersten Messfeldlos-Bilds einer Vielzahl an Partikeln (16) zu einem ersten Zeitpunkt ($t_1$),
   (ii) Aufnehmen eines zweiten Messfeldlos-Bilds der Partikel zu einem zweiten Zeitpunkt ($t_2$), der um einen Zeitversatz ($\tau_v$) später liegt,
   (iii) Bestimmen der Messfeldlos-Partikelgeschwindigkeit aus den Messfeldlos-Bildern,

   (b) das ortsaufgelöste Bestimmen der Mitfeld-Partikelgeschwindigkeit ($v_E$) die folgenden Schritte aufweist:

   (i) Aufnehmen eines ersten Mitfeld-Bilds einer Vielzahl an Partikeln (16) zu einem dritten Zeitpunkt ($t_3$),
   (ii) Aufnehmen eines zweiten Bild der Partikel (16) zu einem vierten Zeitpunkt, der um einen, insbesondere den gleichen, Zeitversatz ($\tau_v$) später liegt, und
   (iii) Bestimmen der Mitfeld-Partikelgeschwindigkeit ($v_E$) aus den Mitfeld-Bildern.

5. Verfahren nach einem der vorstehenden Ansprüche, **dadurch gekennzeichnet, dass**

(a) das ortsaufgelöste Bestimmen der Messfeldlos-Partikelgeschwindigkeit die folgenden Schritte aufweist:

(i) in einem ersten Zeitraum Aufnehmen eines Messfeldlos-Bilds einer Vielzahl von Partikeln (16), die von einem Lichtblatt (38) bestrahlt werden, wobei sich das Lichtblatt entlang der Strömungsrichtung (S) des Gastroms erstreckt,
(ii) im ersten Zeitraum Verändern einer Lichteigenschaft, insbesondere einer Helligkeit oder einer Farbe, des Lichtblatts (38) und
(iii) Bestimmen der Messfeldlos-Partikelgeschwindigkeit aus dem Messfeldlos-Bild, und/oder

(b) das ortsaufgelöste Bestimmen der Mitfeld-Partikelgeschwindigkeit ($v_E$) die folgenden Schritte aufweist:

(i) in einem zweiten Zeitraum Aufnehmen eines zweiten Mitfeld-Bilds einer Vielzahl von Partikeln (16), die vom Lichtblatt (38) bestrahlt werden,
(ii) im zweiten Zeitraum Verändern einer Lichteigenschaft, insbesondere einer Helligkeit oder einer Farbe, des Lichtblatts (38) und
(iii) Bestimmen der Mitfeld-Partikelgeschwindigkeit ($v_E$) aus dem Mitfeld-Bild.

6.  Verfahren nach einem der vorstehenden Ansprüche, **gekennzeichnet durch** die Schritte:

(a) Hinzufügen von Tracerpartikeln zum Gasstrom,
(b) Bestimmen einer Luftgeschwindigkeit des Gasstroms mittels Partikelbildvelozimetrie und
(c) Bestimmen der ortsaufgelösten Ladungsverteilung (Q(y,z)) aus der ortsaufgelösten Luftgeschwindigkeit, der Messfeldlos-Partikelgeschwindigkeit und der Mitfeld-Partikelgeschwindigkeit ($v_E$).

7.  Verfahren nach einem der vorstehenden Ansprüche, **gekennzeichnet durch** die Schritte: Ausgeben einer Warnmeldung, wenn die ortsaufgelöste Ladungsverteilung (Q(y,z)) außerhalb eines Soll-Ladungskennwertintervalls liegt.

8.  Pneumatikfördervorrichtung (10) zum Transportieren von Partikeln (16) in einem Gasstrom, wobei die Partikel (16) in dem Gasstrom elektrostatisch aufladbar sind, mit

einem Gasstromerzeuger, insbesondere einem Gebläse oder einem Kompressor, zum Erzeugen des Gasstroms, und
einer Partikelzuführung zum Zuführen von Partikeln (16) zum Gasstrom, **gekennzeichnet durch**
ein Gasstromladungsmessgerät (18) mit

(a) einer Gasleitung (20),
(b) einem Messfelderzeuger (28) zum Erzeugen eines elektrischen Messfelds in einem Messbereich der Gasleitung (20),
(c) einem Partikelgeschwindigkeitsmesser, der ausgebildet ist zum automatischen Bestimmen einer ortsaufgelösten Partikelgeschwindigkeitsverteilung mittels Partikelbildvelozimetrie und
(d) einer Auswerteeinheit (42), die ausgebildet ist zum automatischen Durchführen eines Verfahrens mit den Schritten:

(i) Messen einer ortsaufgelösten Messfeldlos-Partikelgeschwindigkeit mittels der Partikelbildvelozimetrie-Messeinheit, ohne dass der Messfelderzeuger (28) ein elektrisches Messfeld erzeugt,
(ii) Erzeugen des elektrischen Messfelds mittels des Messfelderzeugers (28) und
(iii) Messen einer ortsaufgelösten Mitfeld-Partikelgeschwindigkeit ($v_E$) mittels der Partikelbildvelozimetrie-Messeinheit und
(iv) Bestimmen zumindest einer ortsaufgelösten Ladungsverteilung (Q(y,z)) aus den ortsaufgelösten Partikelgeschwindigkeiten.

9.  Pneumatikfördervorrichtung (10) nach Anspruch 8, **dadurch gekennzeichnet,**
**dass** das Gasstromladungsmessgerät (18) ausgebildet ist zum automatischen Abgeben eines Warnsignals, wenn die ortsaufgelöste Ladungsverteilung (Q(y,z)) außerhalb eines vorgegebenen Soll-Ladungskennwertintervalls liegt.

**Claims**

1. A method for determining a spatially-resolved charge distribution (Q(y,z)) of electrical charges of particles (16) in a gas stream of a pneumatic conveyor device (10), wherein the particles (16) in the gas stream can be electrostatically charged, comprising the steps:

   (a) directing the gas stream, which contains particles (16), through a fluid line (20),
   (b) spatially-resolved determination of a measuring field-less particle velocity (v) in a measurement area without an electrical measuring field,
   (c) applying an electrical measuring field transverse to the flow direction (S) in the measurement area,
   (d) spatially-resolved determination of a midfield particle velocity ($v_E$) in the measurement area and
   (e) determining the a spatially-resolved charge distribution (Q(y,z)) from the spatially-resolved particle velocities.

2. The method according to claim 1, **characterised in that**
   the spatially-resolved determination of the measuring field-less particle velocity (v) and/or the midfield particle velocity ($v_E$) occurs by means of particle image velocimetry.

3. The method according to one of the preceding claims, **characterised in that** the spatially-resolved determination of the measuring field-less particle velocity (v) and the midfield particle velocity ($v_E$) occurs via laser Doppler anemometry.

4. The method according to one of the preceding claims, **characterised in that**

   (a) the spatially-resolved determination of the measuring field-less particle velocity comprises the following steps:

      (i) recording a first measuring field-less image of a plurality of particles (16) at a first point in time ($t_1$),
      (ii) recording a second measuring field-less image of the particles at a second point in time ($t_2$) that is later by a time offset ($\tau_v$),
      (iii) determining the measuring field-less particle velocity from the measuring field-less images,

   (b) the spatially-resolved determination of the midfield particle velocity ($v_E$), which comprises the following steps:

      (i) recording a first midfield image of a plurality of particles (16) at a third point in time ($t_3$),
      (ii) recording a second image of the particles (16) at a fourth point in time that is later by a time offset ($\tau_v$), in particular the same time offset, and
      (iii) determining the midfield particle velocity ($v_E$) from the midfield images.

5. The method according to one of the preceding claims, **characterised in that**

   (a) the spatially-resolved determination of the measuring field-less particle velocity comprises the following steps:

      (i) in a first time period, recording a measuring field-less image of a plurality of particles (16) irradiated by a light sheet (38), the light sheet extending along the flow direction (S) of the gas stream,
      (ii) in the first time period, altering a property of light, particularly a brightness or colour, of the light sheet (38) and
      (iii) determining the measuring field-less particle velocity from the measuring field-less image and/or

   (b) the spatially-resolved determination of the midfield particle velocity ($v_E$) comprises the following steps:

      (i) in a second time period, recording a second midfield image of a plurality of particles (16) irradiated by a light sheet (38),
      (ii) in the second time period, altering a property of light, particularly a brightness or colour, of the light sheet (38) and
      (iii) determining the midfield particle velocity ($v_E$) from the midfield image.

6. The method according to one of the preceding claims, **characterised by** the steps:

   (a) adding tracer particles to the gas stream,

(b) determining an air velocity of the gas stream by means of particle image velocimetry and

(c) determining the spatially-resolved charge distribution $(Q(y,z))$ from the spatially-resolved air velocity, the measuring field-less particle velocity and the midfield particle velocity $(v_E)$.

7. The method according to one of the preceding claims, **characterised by** the steps: emitting a warning when the spatially-resolved charge distribution $(Q(y,z))$ lies outside of a target charge characteristic interval.

8. A pneumatic conveyor (10) for transporting particles (16) in a gas stream,

wherein the particles (16) in the gas stream can be electrostatically charged, with
a gas stream generator, particularly a fan or a compressor, for generating the gas stream, and
a particle feed for feeding particles (16) to the gas stream,
**characterised by**
a gas stream charge measuring device (18) with

(a) a gas line (20),
(b) a measuring field generator (28) for generating an electrical measuring field in a measurement area of the gas line (20),
(c) a particle velocity measure that is configured to automatically determine a spatially-resolved particle velocity distribution by means of particle image velocimetry and
(d) an evaluation unit (42) that is configured to automatically carry out a method comprising the steps:

(i) measuring a spatially-resolved measuring field-less particle velocity by means of the particle image velocimetry measurement unit without the measuring field generator (28) generating an electrical measuring field,
(ii) generating the electrical measuring field by means of the measuring field generator (28) and
(iii) measuring a spatially-resolved midfield particle velocity $(v_E)$ by means of the particle image velocimetry measurement unit
(iv) determining at least one spatially-resolved charge distribution $(Q(y,z))$ from the spatially-resolved particle velocities.

9. The pneumatic conveyor (10) according to claim 8, characterised that that the gas stream charge measuring device (18) is designed to automatically emit a warning signal when the spatially-resolved charge distribution $(Q(y,z))$ lies outside of a target charge characteristic interval.

**Revendications**

1. Procédé de détermination d'une distribution de charge à résolution spatiale $(Q(y,z))$ de charges électriques de particules (16) dans un flux de gaz d'un dispositif de transport pneumatique (10), les particules (16) dans le flux de gaz pouvant être chargées électrostatiquement, comprenant les étapes consistant à :

(a) faire passer le flux de gaz contenant des particules (16) à travers une conduite de fluide (20),
(b) déterminer à résolution spatiale une vitesse de particules sans champ de mesure (v), dans une zone de mesure sans champ de mesure électrique,
(c) appliquer un champ de mesure électrique transversalement à la direction d'écoulement (S) dans la zone de mesure,
(d) déterminer à résolution spatiale une vitesse de particules avec champ de mesure $(v_E)$ dans la zone de mesure, et
(e) déterminer la distribution de charge à résolution spatiale $(Q(y,z))$ à partir des vitesses de particules à résolution spatiale.

2. Procédé selon la revendication 1, **caractérisé en ce que** la détermination à résolution spatiale de la vitesse de particules sans champ de mesure (v) et/ou de la vitesse de particules avec champ de mesure $(v_E)$ s'effectue par vélocimétrie par images de particules.

3. Procédé selon l'une des revendications précédentes, **caractérisé en ce que** la détermination à résolution spatiale de la vitesse de particules sans champ de mesure (v) et de la vitesse de particules avec champ de mesure $(v_E)$ s'effectue par anémométrie laser Doppler.

4. Procédé selon l'une des revendications précédentes, **caractérisé en ce que**

(a) la détermination à résolution spatiale de la vitesse de particules sans champ de mesure comprend les étapes suivantes consistant à :

(i) prendre une première image sans champ de mesure d'une pluralité de particules (16) à un premier instant ($t_1$),
(ii) prendre une deuxième image sans champ de mesure des particules à un deuxième instant ($t_2$) qui est plus tardif d'un décalage temporel ($\tau_v$),
(iii) déterminer la vitesse des particules sans champ de mesure à partir des images sans champ de mesure,

(b) la détermination à résolution spatiale de la vitesse de particules avec champ de mesure ($v_E$) comprend les étapes suivantes consistant à :

(i) prendre une première image avec champ de mesure d'une pluralité de particules (16) à un troisième instant ($t_3$),
(ii) prendre une deuxième image des particules (16) à un quatrième instant qui est plus tardif d'un décalage temporel, en particulier du même décalage temporel ($\tau_v$), et
(iii) déterminer la vitesse de particules avec champ de mesure ($v_E$) à partir des images avec champ de mesure.

5. Procédé selon l'une des revendications précédentes, **caractérisé en ce que**

(a) la détermination à résolution spatiale de la vitesse de particules sans champ de mesure comprend les étapes suivantes consistant à :

(i) dans un premier laps de temps, prendre une image sans champ de mesure d'une pluralité de particules (16) irradiées par une nappe de lumière (38), la nappe de lumière s'étendant le long de la direction d'écoulement (S) du flux de gaz,
(ii) dans le premier laps de temps, modifier une caractéristique lumineuse, en particulier une luminosité ou une couleur, de la nappe de lumière (38), et
(iii) déterminer la vitesse de particules sans champ de mesure à partir de l'image sans champ de mesure, et/ou

(b) la détermination à résolution spatiale de la vitesse de particules avec champ de mesure ($v_E$) comprend les étapes suivantes consistant à :

(i) dans un deuxième laps de temps, prendre une deuxième image avec champ de mesure d'une pluralité de particules (16) irradiées par la nappe de lumière (38),
(ii) dans le deuxième laps de temps, modifier une caractéristique lumineuse, en particulier une luminosité ou une couleur, de la nappe de lumière (38), et
(iii) déterminer la vitesse de particules avec champ de mesure ($v_E$) à partir de l'image avec champ de mesure.

6. Procédé selon l'une des revendications précédentes, **caractérisé par** les étapes consistant à :

(a) ajouter des particules de traceur au flux de gaz,
(b) déterminer une vitesse d'air du flux de gaz par vélocimétrie par images de particules, et
(c) déterminer la distribution de charge à résolution spatiale (Q(y,z)) à partir de la vitesse d'air à résolution spatiale, de la vitesse de particules sans champ de mesure et de la vitesse de particules avec champ de mesure ($v_E$).

7. Procédé selon l'une des revendications précédentes, **caractérisé par** les étapes consistant à : émettre un message d'avertissement si la distribution de charge à résolution spatiale (Q(y,z)) se situe en dehors d'un intervalle de valeurs caractéristiques de charge de consigne.

8. Dispositif de transport pneumatique (10) pour transporter des particules (16) dans un flux de gaz, les particules (16) dans le flux de gaz pouvant être chargées électrostatiquement, comprenant

un générateur de flux de gaz, en particulier un ventilateur ou un compresseur, pour générer le flux de gaz, et une alimentation en particules pour amener des particules (16) au flux de gaz,
**caractérisé par**
un appareil de mesure de la charge du flux de gaz (18) comprenant

(a) une conduite de gaz (20),
(b) un générateur de champ de mesure (28) pour générer un champ de mesure électrique dans une zone de mesure de la conduite de gaz (20),
(c) un vélocimètre de particules conçu pour déterminer automatiquement une distribution de la vitesse de particules à résolution spatiale par vélocimétrie par images de particules, et
(d) une unité d'évaluation (42) conçue pour mettre en œuvre automatiquement un procédé comprenant les étapes consistant à :

(i) mesurer une vitesse de particules sans champ de mesure à résolution spatiale au moyen de l'unité de mesure par vélocimétrie par images de particules, sans que le générateur de champ de mesure (28) génère un champ de mesure électrique,
(ii) générer le champ de mesure électrique au moyen du générateur de champ de mesure (28), et
(iii) mesurer une vitesse de particules avec champ de mesure ($v_E$) à résolution spatiale au moyen de l'unité de mesure par vélocimétrie par images de particules, et
(iv) déterminer au moins une distribution de charge à résolution spatiale ($Q(y,z)$) à partir des vitesses de particules à résolution spatiale.

9. Dispositif de transport pneumatique (10) selon la revendication 8, **caractérisé en ce que** l'appareil de mesure de la charge du flux de gaz (18) est conçu pour émettre automatiquement un signal d'avertissement si la distribution de charge à résolution spatiale ($Q(y,z)$) se situe en dehors d'un intervalle de valeurs caractéristiques de charge de consigne.

Fig. 1b

Fig. 1c

Fig. 1

Fig. 1a

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- WO 2014106078 A2
- US 6049382 A
- US 8470151 B2
- EP 3431264 B1
- WO 2021005396 A1
- JP 2015102386 A

### In der Beschreibung aufgeführte Nicht-Patentliteratur

- Measurement of the deposit formation during pneumatic transport of PMMA powder. *Advanced powder technology*, 2020, vol. 31, ISSN 0921-8831, 3597-3609
- **GROßHANS et al.** Exploring the meachanism of inter-particle charge diffusion. *The European physical journal: applied physics*, 2018, vol. 82 (1), ISSN 1286-0042